# EUROPÄISCHE PATENTSCHRIFT

(11) **EP 3 746 752 B1**
(45) Veröffentlichungstag und Bekanntmachung des Hinweises auf die Patenterteilung: **23.03.2022**
(21) Anmeldenummer: 19700590.3
(22) Anmeldetag: 14.01.2019
(51) Int. Cl.: G01F 23/284, G01F 23/292, G01S 13/88, G01F 25/00, G01S 7/03, G01S 7/292, G01S 7/35, G01S 13/86

(54) **FÜLLSTANDSMESSGERÄT**
FILL LEVEL MEASURING DEVICE
DISPOSITIF DE MESURE DU NIVEAU DE REMPLISSAGE

(30) Priorität: 02.02.2018 DE 102018102366
(43) Veröffentlichungstag der Anmeldung: 09.12.2020
(73) Patentinhaber: Endress+Hauser SE+Co. KG, 79689 Maulburg (DE)
(72) Erfinder: FALGER, Florian, 79685 Häg-Ehrsberg (DE); PALATINI, Florian, 79692 Kleines Wiesental (DE); KLÖFER, Peter, 79585 Steinen (DE); SCHLEIFERBÖCK, Jan, 79595 Rümmingen (DE)
(74) Vertreter: Andres, Angelika Maria
(86) Internationale Anmeldenummer: PCT/EP2019/050804
(87) Internationale Veröffentlichungsnummer: WO 2019/149512

(56) Entgegenhaltungen:
- CN-A- 106 949 944
- CN-A- 106 949 944
- CN-U- 206 212 180
- DE-A1- 19 860 901
- DE-A1- 19 860 901
- KR-A- 20170 116 610
- US-A1- 2004 031 335
- US-A1- 2004 031 335
- US-A1- 2012 281 096
- US-A1- 2012 281 096

## Beschreibung

In der Prozessautomatisierungstechnik werden vielfach Feldgeräte eingesetzt, die zur Erfassung oder zur Beeinflussung von Prozessvariablen dienen. Zur Erfassung von Prozessvariablen werden Sensoren eingesetzt, die beispielsweise in Füllstandsmessgeräten, Durchflussmessgeräten, Druck- und Temperaturmessgeräten, pH-Redoxpotential-Messgeräten, Leitfähigkeitsmessgeräten, oder vergleichbaren Geräten zum Einsatz kommen. Sie erfassen die entsprechenden Prozessvariablen, wie Füllstand, Durchfluss, Druck, Temperatur, pH-Wert, Redoxpotential oder Leitfähigkeit. Verschiedenste solcher Feldgeräte-Typen wird von der Firma Endress + Hauser hergestellt und vertrieben.

Zur Füllstandsmessung von Füllgütern in Behältern haben sich berührungslose Messverfahren etabliert, da sie robust und wartungsarm sind. Dabei werden unter dem Begriff "*Behälter*" im Rahmen der Erfindung auch nicht-abgeschlossene Behältnisse, wie beispielsweise Becken, Seen oder fließende Gewässer verstanden. Ein weiterer Vorteil berührungsloser Messverfahren besteht in der Fähigkeit, den Füllstand quasi kontinuierlich messen zu können. Im Bereich der kontinuierlichen Füllstandsmessung werden daher überwiegend Radar-basierte Messverfahren eingesetzt (im Kontext dieser Patentanmeldung definiert sich "*Radar*" als Signale bzw. elektromagnetische Wellen mit Frequenzen zwischen 0.03 GHz und 300 GHz). Die beiden gängigen Messprinzipien bilden hierbei das Puls-Laufzeit-Prinzip (auch unter dem Begriff "*Pulsradar*" bekannt) sowie das FMCW-Prinzip ("*Frequency Modulated Continuous Wafe*")*.*

Ein Füllstandsmessgerät, welches nach dem Puls-Laufzeit-Verfahren arbeitet, ist beispielsweise in der Offenlegungsschrift DE 10 2012 104 858 A1 beschrieben. Bezüglich eines typischen Aufbaus von FMCW-basierten Füllstandsmessgeräten sei exemplarisch auf die Offenlegungsschrift DE 10 2013 108 490 A1 verwiesen. In der US-Patentanmeldung 2012/0281096 A1 wird ein Radar-basiertes Füllstandsmessgerät beschrieben, dass zu Inspektionszwecken zusätzlich eine Infrarot-Kamera zur Überwachung des Behälter-inneren umfasst. Radar-basierte Füllstandsmessung ist hochgenau und störunempfindlich gegenüber rauen oder welligen Füllgut-Oberflächen. Jedoch ist es je nach Art des Füllgutes und Beschaffenheit des Behälter-Inneren nicht immer möglich, den mittels Radar ermittelten Füllstandswert zu verifizieren, da beispielsweise in manchen Fällen fälschlicherweise ein Störecho anstelle des Echos der Füllgutoberfläche zur Füllstands-Berechnung herangezogen wird. Dadurch kann es zu einer falschen Ermittlung des Füllstand kommen, wodurch unter Umständen ein entsprechender Gefahrenzustand in der Prozessanlage auftreten kann.

Der Erfindung liegt daher die Aufgabe zugrunde, ein sichereres Füllstandsmessgerät bereitzustellen.

Die Erfindung löst diese Aufgabe durch ein Füllstandsmessgerät zur Bestimmung des Füllstandes eines in einem Behälter befindlichen Füllgutes, umfassend,
- Ein Radar-Modul, das ausgelegt ist, ein Radarsignal in Richtung des Füllgutes auszusenden und anhand des reflektierten Radarsignals einen Abstand zur Oberfläche des Füllgutes zu bestimmen,
- Eine 3D-Kamera, die konzipiert ist, um anhand einer Aufnahme von zumindest einem Bereich der Oberfläche des Füllgutes eine Vielzahl an Distanzwerten in Abhängigkeit korrespondierender Positionen innerhalb des Bereichs zu ermitteln, und
- eine Auswerte-Schaltung, die ausgelegt ist, um
   ∘ aus den Distanzwerten einen maximalen Distanzwert und einen minimalen Distanzwert zu ermitteln, und um
   ∘ anhand des Abstandes den Füllstand zu bestimmen, sofern der Abstand kleiner als der maximale Distanzwert und größer als der minimale Distanzwert ist.

Im Rahmen dieser Anmeldung fällt unter den Begriff "3D-Kamera" jedes System, mittels dem in einem ausgewählten Bildbereich die jeweiligen Entfernungswerte zum nächstliegenden Objekt als entsprechender Pixelwert aufnehmbar sind. Demnach können hierzu beispielsweise sogenannte TOF-Kameras ("*Time Of Flight*") eingesetzt werden, die entsprechende halbleiterbasierte Sensoren (auch bekannt als PMD-Sensoren, "*Photonic Mixing Device*") umfassen. Dieselbe Funktionalität kann jedoch beispielsweise auch mittels einer sogenannten Lichtfeld-Kamera oder zumindest zwei zusammengeschalteten, konventionellen Digital-Kameras bewirkt werden.

Aufgrund der Redundanz bzw. der Verifikation des vom Radar-Modul ermittelten Messwertes durch die 3D-Kamera wird das erfindungsgemäße Füllstandsmessgerät hinsichtlich der Ermittlung des korrekten Füllstandes sicherer. Dennoch wird durch das Radar-Modul nach wie vor eine hohe Messgenauigkeit gewährleistet. Dabei nimmt die Messgenauigkeit des Radar-Moduls mit steigender Frequenz des Radarsignals zu. Daher ist es von Vorteil, wenn das Radar-Modul konzipiert ist, um das Radarsignal mit einer Frequenz von zumindest 75 GHz auszusenden (unabhängig davon, ob das Radar-Modul den Abstand zur Oberfläche des Füllgutes nach dem FMCW-Verfahren oder nach dem Puls-Laufzeit Verfahren ermittelt). Es versteht sich von selbst, dass die Erfindung auch bei tieferen Frequenzen, bspw. 26 GHz, ausgeführt werden kann.

Im Fehlerfall, also wenn der vom Radar-Modul ermittelte Abstand kleiner als der minimale Distanzwert oder größer als der maximale Distanzwert ist, kann die Auswerte-Schaltung bspw. ausgelegt werden, dass sie in diesem Fall ein erstes Hinweis-Signal ausgibt. Dieses könnte über eine entsprechende Schnittstelle des Feldgerätes einer Leitstelle übermittelt werden, so dass hierauf in der Prozessanlage gegebenenfalls reagiert werden kann oder eine Überprüfung des Füllstandsmessgerätes durch einen Servicetechniker stattfindet.

Ebenso kann die Auswerte-Schaltung konzipiert werden, um das erste Hinweis-Signal und/oder ein weiteres Hinweis-Signal auszugeben, sofern der minimale Distanzwert kleiner als ein entsprechender Wert zu einem vordefinierten Maximal-Füllstand ist. Dies entspricht der zumindest punktuellen Überschreitung des Füllstandes über einen erlaubten Maximal-Füllstand hinaus. Vorteilhaft hieran ist, dass bereits das punktuelle Überschreiten des Maximalfüllstandes (bspw. durch einen Schüttgutkegel bei der Befüllung) erkannt wird, auch wenn das Radar-Modul dies noch nicht erfasst.

In einer weiteren Auslegungsvariante des Füllstandsmessgerätes kann die Auswerte-Schaltung ausgelegt werden, um
- durch Subtraktion des minimalen Distanzwertes vom maximalen Distanzwert einen Differenzwert zu berechnen, und um
- das erste Hinweis-Signal und/oder ein weiteres Hinweis-Signal auszugeben, sofern der Differenzwert eine vordefinierte Maximalspanne überschreitet.

In diesem Fall wird ein Hinweis-Signal ausgegeben, sobald die Füllgut-Oberfläche zu inhomogen wird. bzw. das Füllgut im Behälter zu inhomogen verteilt ist. Vorkommen kann dies beispielsweise, wenn sich bei einer Entleerung des Behälters an dessen Innenwand Rückstände anhaften, oder wenn sich bei der Befüllung ein einzelner Schüttgutkegel zu stark ausprägt. Somit könnte bei Erscheinen des Signals eine Säuberung des Behälters veranlasst werden, oder eine Umverteilung des Füllgutes, bspw. mittels eines Rührwerkes. Darüber hinaus könnte bspw. auf Basis des ermittelten Differenzwertes eine Steigung bzw. Neigung der Füllgut-Oberfläche zwischen den Orten der zwei hierzu korrespondierenden Distanzwerte dij berechnet werden. Genutzt werden kann solch eine Information, um zum Beispiel die Zuspitzung bzw. den Winkel eines etwaigen Schüttgut-Kegels ermitteln zu können.

Auf Basis der Aufnahme der 3D-Kamera können neben der Validierung des Füllstandes je nach Auslegung auch anderweitige Eigenschaften des Füllgutes bestimmt werden. Sofern die Auswerte-Schaltung bspw. ausgelegt ist, um aus den Distanzwerten eines ausgewählten Ausschnitts des Bereichs der Aufnahme eine Streuung zu ermitteln, wäre es denkbar, dass die Auswerte-Schaltung aus der ermittelten Streuung eine Rauigkeit der Oberfläche des Füllgutes bestimmt. Sofern die Art des Füllgutes bekannt ist, kann hieraus beispielsweise eine Korngröße oder eine vergleichbare Größe abgeleitet werden. Alternativ oder zusätzlich zur Streuung könnte gegebenenfalls auch eine (Standard-) Abweichung zum Mittelwert oder zum Median der von der 3D-Kamera aufgenommenen Distanzwerte bestimmt werden. Somit wäre es zusätzlich oder alternativ zur Bestimmung des Füllstandes anhand des vom Radar-Modul gemessenen Abstandes, der anhand des maximalen und minimalen Distanzwertes verifiziert wird, auch möglich, den vom Radar-Modul gemessenen Abstand anhand des Medians oder Mittelwertes zu verifizieren: Sofern der vom Radar-Modul gemessene Abstand zur Füllgut-Oberfläche die vordefinierte (Standard-) Abweichung zum Median oder Mittelwert der von der 3D-Kamera aufgenommenen Distanzwerte unterschreitet, wird der Füllstand anhand des Abstandes bestimmt.

Je nach Art der 3D-Kamera kann diese ausgelegt sein, um in dem Bereich, in dem die 3D-Kamera die Distanzwerte ermittelt, zusätzlich ein Graustufenbild von der Oberfläche des Füllgutes zu erzeugen. Dies kann im Rahmen der Erfindung beispielsweis vorteilhaft genutzt werden, um bei Ausgabe eines Hinweis-Signals gleichzeitig ein Graustufenbild zu aufzunehmen. So wird es einem Anlagen-Bediener oder Service-Techniker im Fehlerfall ermöglicht, innerhalb des Behälters nach einer potentiellen Fehlerursache zu suchen. In einem Graustufenbild könnte außerdem der Kegel des Radarsignals visualisiert werden, beispielsweise als Zielkreis oder Kreuz. Hiermit kann die aktuelle Ausrichtung des Füllstandsmessgerätes nachvollzogen werden. Beziehungsweise könnte hierdurch die Ausrichtung des Füllstandsmessgerätes bei der Montage unterstützt werden, beispielsweise um das Radarsignal an etwaigen Störkörpern "vorbei zu lenken".

Eine weitere vorteilhafte Weiterentwicklung des Füllstandsmessgerätes sieht vor, die Auswerte-Schaltung so zu konzipieren, dass sie anhand der Aufnahme innerhalb des Bereichs eine Kontur zu erfasst, sofern entlang der Kontur eine Unstetigkeit zwischen den Distanzwerten beidseitig der Kontur detektiert wird. Nutzbar wäre dies, um anhand der erfassten Kontur einen Innenquerschnitt, insbesondere eine Innenquerschnittsfläche, des Behälters zu ermitteln. Daneben könnte es sich jedoch auch um die Konturen anderer Gegenstände, wie beispielsweise Rührwerke handeln. Vor allem bewegliche Objekte wie Rührwerke können hierbei als solche lokalisiert werden, wenn die Auswerte-Schaltung ausgelegt ist, um eine Bewegung und/oder eine Verschiebung der Kontur zu erfassen.

Mithilfe der 3D-Kamera ist es zudem denkbar, die Auswerte-Schaltung auszulegen, um die Ausrichtung des Füllstandsmessgerätes gegenüber dem Lot zu bestimmen. Möglich ist dies, sofern anhand der Aufnahme innerhalb des Bereichs eine in etwa planare Ebene, wie die Oberfläche eines flüssigen Füllgutes, ermittelbar ist. Somit kann der Normalen-Vektor der Ebene ermittelt werden. Da die resultierende Ebene bei flüssigen Füllgütern in der Horizontalen liegt, entspricht der ermittelte Normalen-Vektor dem Lot. Hieraus lässt sich wiederum die Ausrichtung des Füllstandsmessgerätes in Bezug zum Lot ermitteln. Vorteilhaft kann dies bei der Installation des Füllstandsmessgerätes genutzt werden, da eine genau Lotrechte Ausrichtung des Radar-Moduls für dessen sicheren Betrieb vorteilhaft ist. Optisch angezeigt werden könnte die momentane Ausrichtung bzw. Deviation vom Lot während der Installation des Füllstandsmessgerätes auf einem Display des Füllstandsmessgerätes oder dem eines Peripher-Gerätes.

Analog zu dem erfindungsgemäßen Füllstandsmessgerät wird die Aufgabe, die der Erfindung zugrunde liegt, außerdem durch ein Verfahren zur Bestimmung des Füllstandes eines in einem Behälter befindlichen Füllgutes mittels des Füllstandsmessgerätes nach einer der zuvor genannten Ausführungsvarianten gelöst. Folgende Verfahrensschritte umfasst das Verfahren:
- Bestimmung eines Abstandes zur Oberfläche des Füllgutes anhand eines reflektierten Radarsignals, das von einem Radar-Modul in Richtung des Füllgutes ausgesendet ist,
- Ermittlung einer Vielzahl an Distanzwerten anhand einer Aufnahme einer 3D-Kamera von zumindest einem Bereich der Oberfläche des Füllgutes,
- Bestimmung eines maximalen Distanzwertes und eines minimalen Distanzwerts aus den Distanzwerten durch eine Auswerte-Schaltung,
- Bestimmung des Füllstandes anhand des Abstandes durch die Auswerte-Einheit, sofern der Abstand kleiner als der maximale Distanzwert und größer als der minimale Distanzwert ist.

Die Erfindung wird anhand der nachfolgenden Figuren erläutert. Es zeigt:
Fig. 1: eine schematische Darstellung eines erfindungsgemäßen Füllstandsmessgerätes an einem Behälter mit einem Füllgut,
Fig. 2: eine Draufsicht auf das Füllgut aus der Perspektive des erfindungsgemäßen Füllstandsmessgerätes, und
Fig. 3: Verschiedene Messwerte in Abhängigkeit unterschiedlicher Messbedingungen.

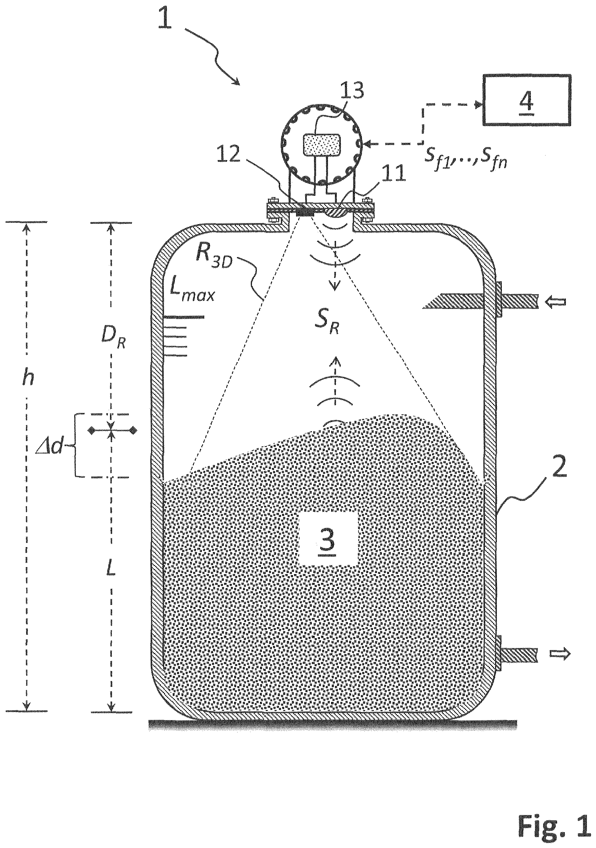

Zum Verständnis der Erfindung ist in Fig. 1 eine Anordnung des erfindungsgemäßen Füllstandsmessgerätes 1 an einem Flanschanschluss eines Behälters 2 gezeigt, wie sie für Radar-basierte Füllstandsmessgeräte allgemein üblich ist. Im Inneren des Behälters 2 befindet sich ein Füllgut 3, dessen Füllstand L durch das Füllstandsmessgerät 1 zu bestimmen ist. Hierzu ist das Füllstandsmessgerät 1 in einer bekannten Einbauhöhe h oberhalb des Füllgutes 3 am Behälter 2 angebracht. Dabei kann der Behälter 2 je nach Art mehr als 100 m hoch sein.

Das Füllstandsmessgerät 1 ist so am Behälter 2 ausgerichtet und befestigt, dass es mittels eines Radar-Moduls 11 kontinuierlich, zyklisch oder auch azyklisch ein Radarsignal S_{R} in Richtung der Oberfläche des Füllgutes 3 aussendet. Infolge der Reflektion des Radarsignals S_{R} an der Füllgut-Oberfläche empfängt das Radar-Modul 11 des Füllstandsmessgerätes 1 das reflektierte Radarsignal S_{R} in Abhängigkeit des Abstandes D_{R} = h - L zur Füllgut-Oberfläche nach einer entsprechenden Laufzeit.

In der Regel ist das Füllstandsmessgerät 1 über eine Schnittstelle, etwa "PROFIBUS", "HART" oder "Wireless HART" mit einer übergeordneten Einheit 4, wie z. B. einem Prozessleitsystem, verbunden. Hierüber kann der Füllstandswert L übermittelt werden, beispielsweise um gegebenenfalls Zu- oder Abflüsse des Behälters 2 zu steuern. Es können aber auch anderweitige Informationen über den allgemeinen Betriebszustand des Füllstandsmessgerätes 1 kommuniziert werden.

Sofern das Radar-Modul 11 nach dem Pulsradar-Verfahren arbeitet, handelt es sich bei dem Radarsignal S_{R} um ggf. periodisch ausgesendete Radar-Pulse, so dass anhand der Pulslaufzeit zwischen Aussenden des Pulses und des reflektierten, pulsförmigen Radarsignals S_{R} unmittelbar der Abstand D_{R} und somit der Füllstand L bestimmt werden kann.

Im Fall von FMCW Radar handelt es sich bei dem Radarsignal S_{R} um ein kontinuierliches Signal, allerdings mit zeitlich definiert modulierter Frequenz. Dementsprechend kann die Laufzeit und somit der Abstand D_{R} bzw. der Füllstand L bei Implementierung des FMCW-Verfahrens auf Basis der momentanen Frequenzdifferenz zwischen dem aktuell empfangenen Radarsignal S_{R} und dem gleichzeitig ausgesendeten Radarsignal S_{R} bestimmt werden. Mit beiden Radar-Verfahren ist es nach dem Stand der Technik möglich, den Füllstand L bei Idealbedingungen (gut reflektierendem Füllgut 3, planarer Füllgut-Oberfläche, keine Hindernisse wie Rührwerke oder sonstige Einbauten im Signalpfad des Radarsignals S_{R}) bereits mit einer Genauigkeit im Sub-Mikrometer-Bereich aufzulösen. Selbst bei rauen bzw. welligen Füllgut-Oberflächen oder staubhaltiger Atmosphäre ist mittels der oben beschriebenen Radar-Verfahren eine zuverlässige Messung des Füllstandes L an einem Punkt der Füllgut-Oberfläche möglich.

Allerdings stößt die punktuelle Messung des Füllstandes L mittels der oben beschriebenen Radar-Verfahren an seine Grenzen, wenn die Oberfläche des Füllgutes 3 nicht planar ist. Dies kann insbesondere bei Schüttgut-artigem Füllgut 3 eintreten, bspw. wenn sich beim Befüllen des Behälters 2 Schüttkegel bilden. Außerdem kann es beim Abpumpen des Füllgutes 3 zu Vertiefungstrichtern an der Füllgut-Oberfläche kommen. Da mittels des Radar-Moduls 11 der Füllstand lediglich punktuell an einer Stelle der Oberfläche des Füllgutes 3 bestimmt wird, kann dies zu einer fehlerhaften Interpretation des Füllstandes L führen. So kann zum Beispiel ein Entleerungsvorgang gestoppt werden, wenn durch das Radar-Modul 11 ein leerer Behälter 2 ermittelt wurde, obwohl am Rand des Behälter-Inneren noch Füllgut 3 vorhanden ist. Im entgegengesetzten Fall kann es bei vollem Behälter 2 vorkommen, dass ein Befüll-Vorgang nicht angehalten wird, obwohl ein Maximalfüllstand Lₘₐₓ an einer Stelle der Füllgut-Oberfläche bereits überschritten ist, weil dies durch das Radar-Modul 11 nicht erkannt wird.

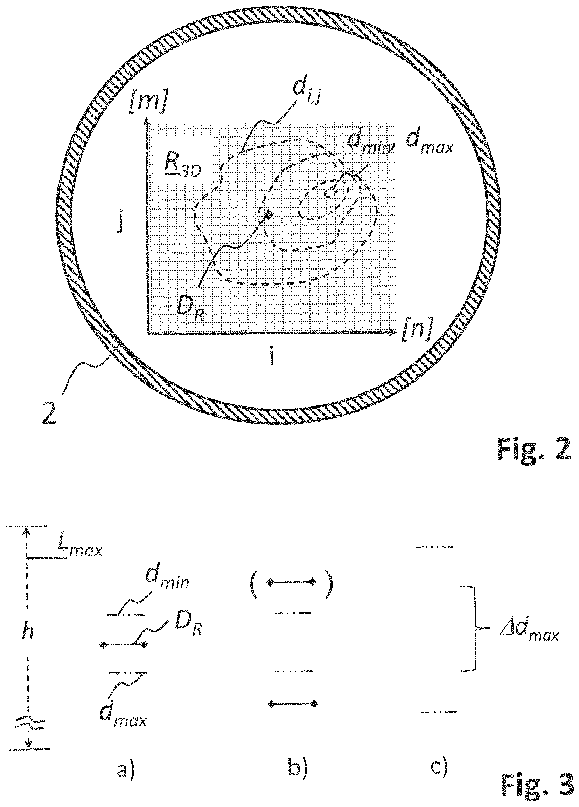

Erfindungsgemäß umfasst das in Fig. 1 dargestellte Füllstandsmessgerät 1 daher neben dem Radar-Modul 11 zum Aussenden und Empfangen des Radarsignals S_{R} eine 3D-Kamera 12. Analog zum Radar-Modul 11 ist die 3D-Kamera 12 so angeordnet und ausgerichtet, dass mittels der 3D-Kamera 12 eine Aufnahme R_{3D} von der Oberfläche des Füllgutes 3 oder zumindest von einem Bereich [m; n] der Oberfläche aufgenommen werden kann. Dabei setzt sich die Aufnahme R_{3D}, wie aus der Draufsicht auf die Füllgut-Oberfläche in Fig. 2 ersichtlich wird, aus einer Vielzahl an Distanzwerten dij in Abhängigkeit korrespondierender Pixel bzw. Positionen [i, j] innerhalb des aufgenommenen Bereichs [m; n] zusammen.

Grundsätzlich erhöht die zusätzliche Ermittlung der Distanzwerte dij durch die 3D-Kamera die Redundanz des Füllstandsmessgerätes 1: Die Distanzwerte dij können mit dem Abstand D_{R}, der vom Radar-Modul 11 ermittelt wird, verglichen werden. Hierzu sind aus den Distanzwerten dij der 3D-Kamera jeweils der maximale Distanzwert dₘₐₓ und der minimale Distanzwert dₘᵢₙ zu ermitteln. Sofern der Abstand D_{R} kleiner als der maximale Distanzwert dₘₐₓ und größer als der minimale Distanzwert dₘᵢₙ ist (dargestellt in Abbildung a) von Fig. 3), kann dies als Verifikation des vom Radar-Modul 11 ermittelten Abstandes D_{R} interpretiert werden. Sofern die Verifikation erfolglos ist, also der vom Radar-Modul 11 ermittelte Abstand D_{R} kleiner als der minimale Distanzwert dₘᵢₙ oder größer als der maximale Distanzwert dₘₐₓ ist (dargestellt in Abbildung b) in Fig. 3), kann das Füllstandsmessgerät 1 beispielsweise ein erstes Hinweis-Signal s_{f1} an die übergeordnete Einheit 4 ausgeben. Ursache hierfür kann beispielsweise sein, dass das Radar-Modul nicht das Radarsignal S_{R}, das als Echo von der Füllgut-Oberfläche entsteht, sondern ein Störecho wie beispielsweise eine Mehrfachreflektion, empfängt.

Angewendet werden kann diese Art der Verifikation sowohl bei planaren als auch nichtplanaren Füllgut-Oberflächen. Allgemein stellt die Fähigkeit zur Verifikation des ermittelten Füllstands L eine vorteilhafte Eigenschaft des Füllstandsmessgerätes 1 dar, da hiermit potentiell eine der geforderten Vorgaben bezüglich funktionaler Sicherheit, bspw. gemäß der Norm IEC 61508, erfüllt werden kann. Die Konformität zu entsprechenden Normen ist bei vielen Anwendungen wiederum Grundvoraussetzung dafür, damit das Füllstandsmessgerät 1 für die entsprechende Anwendung zugelassen wird.

Bei dem in Fig. 1 dargestellten Füllstandsmessgerät 1 ist zur Verifikation des Abstandes D_{R} eine Auswerte-Schaltung 13 vorgesehen, die zu diesem Zweck die Distanzwerte d_{i,j} mit dem vom Radar-Modul 11 ermittelten Abstand D_{R} vergleicht. Dabei kann die Auswerte-Schaltung 13 zum Beispiel als Microcontroller realisiert sein, bei dem über entsprechende Eingänge die Distanzwerte dij und der Abstand D_{R} vom Radar-Modul 11 bzw. der 3D-Kamera abgerufen werden können. Ausgangsseitig kann die Auswerte-Schaltung 13 an die übergeordnete Einheit 4 angebunden sein, um bspw. im Falle einer erfolglosen Verifikation das entsprechende erste Hinweis-Signal s_{f1} zu übermitteln.

Bei der in Fig. 2 dargestellten Aufnahme R_{3D} der Füllgut-Oberfläche ist eine Situation dargestellt, bei der die Füllgut-Oberfläche nicht planar ist, sondern einen Schüttgut-Kegel aufweist (siehe auch Fig. 1). Dabei ist der Schüttgut-Kegel bzw. das Profil der Füllgut-Oberfläche in Form von Höhenlinien dargestellt. Dementsprechend befindet sich die von der 3D-Kamera erfasste, minimale Distanz dₘᵢₙ auf der Spitze des Schüttgut-Kegels. In einer alternativen Interpretation von Fig. 2 können die Höhenlinien der Füllgut-Oberfläche auch einen Vertiefungstrichter darstellen, so dass die von der 3D-Kamera 12 ermittelte, maximale Distanz dₘₐₓ den tiefsten Punkt des Vertiefungstrichters repräsentiert.

Auch bei einer planaren Oberfläche, beispielsweise bei flüssigen Füllgütern 2, ergeben sich durch die zusätzliche 3D-Kamera 12 gegebenenfalls vorteilhafte Synergie-Effekte: So kann die Auswerte-Schaltung 13 bspw. ausgelegt werden, um die Ausrichtung des Füllstandsmessgerätes 1 gegenüber dem Lot zu bestimmen. Dies kann zum Beispiel berechnet werden, indem innerhalb des Bereichs [m; n] der Aufnahme R_{3D} auf Basis der Distanzwerte d_{i,j} mathematisch eine Ebene definiert und deren Normalen-Vektor ermittelt wird. Da die resultierende Ebene bei flüssigen Füllgütern 3 in der Horizontalen liegt, entspricht der Normalen-Vektor dem Lot. Da eine genau Lotrechte Ausrichtung des Radar-Moduls 11 aufgrund des optimalen Empfangs des reflektierten Radarsignals S_{R} vorteilhaft ist, bietet sich die Ermittlung der Ausrichtung gegenüber dem Lot vor allem bei der Installation des Füllstandsmessgerätes 1 an. So könnte bspw. die momentane Ausrichtung bzw. Deviation vom Lot während der Installation des Füllstandsmessgerätes 1 auf dessen Display oder einem Display eines Peripher-Gerätes angezeigt werden.

Neben der reinen Verifikation des ermittelten Abstandes D_{R} bietet die Aufnahme R_{3D} der Distanzwerte d_{i,j} weitere Synergie-Effekte: Durch weitergehende Analyse der Distanzwerte d_{i,j} können weitere irreguläre Zustände im Behälter 2 erkannt werden: So kann anhand des Differenzwertes Δd zwischen dem maximalen Distanzwert dₘₐₓ und dem minimalen Distanzwert dₘᵢₙ und/oder der absoluten Lage von minimalem Distanzwert dₘᵢₙ und maximalem Distanzwert dₘₐₓ (in Bezug zur Behälterhöhe h) bspw. auf einen etwaigen Schüttgut-Kegel, einen Vertiefungstrichter oder Ablagerungen des Füllgutes 3 an der Wand des Behälters 2 geschlossen werden. Hierbei kann insbesondere bei Überschreiten des Differenzwertes Δd über eine vordefinierte Maximalspanne Δdₘₐₓ (schematisch in Fig. 3, Abbildung c) dargestellt) ein entsprechendes Hinweis-Signal s_{f1},....,s_{fn} erzeugt werden. Darüber hinaus könnte bspw. auf Basis des Differenzwertes Δd eine Steigung bzw. Neigung der Füllgut-Oberfläche zwischen den Orten der zwei hierzu korrespondierenden Distanzwerte d_{i,j} berechnet werden, um zum Beispiel die Zuspitzung eines etwaigen Schüttgut-Kegels ermitteln zu können.

Sofern die 3D-Kamera hierfür ausgelegt ist, kann sie zumindest in denjenigen Situationen, in denen ein Hinweis-Signal s_{fn} ausgegeben wird, zusätzlich ein Graustufenbild des Bereichs [m;n] der Füllgut-Oberfläche aufnehmen, das zur Begutachtung der jeweiligen Situation bereitgestellt werden kann (am Display des Füllstandsmessgerätes 1 oder beispielsweise auch an einem Display eines externen Mobilfunkgerätes).

In Fig. 2 ist nicht dargestellt, dass die Aufnahme R_{3D} in Fig. 2 den Innenquerschnitt des Behälters 2 mitumfasst. In solch einem Fall könnte die Auswerte-Schaltung 13 beispielsweise ausgelegt werden, um den Innenquerschnitt auf Basis der Aufnahme R_{3D} zu ermitteln. Dabei kann der Innenquerschnitt als solcher detektiert werden, indem die Auswerte-Schaltung innerhalb der Aufnahme R_{3D} nach einer entsprechenden Kontur innerhalb der Aufnahme R_{3D} sucht. Dabei definiert sich eine "Kontur" dadurch, dass entlang der Kontur eine vordefinierte Unstetigkeit, also ein "Knick" oder ein Sprung, der entsprechenden Distanzwerte d_{i,j} zwischen den zwei Seiten der Kontur feststellbar ist.

In diesem Zusammenhang kann ein Sprung zwischen zwei Distanzwerten d_{i,j}, die möglicherweise durch eine Kontur getrennt sind, mathematisch im einfachsten Fall dadurch erkannt werden, dass der Differenzwert dieser Distanzwerte d_{i,j} einen vordefinierten Wert überschreitet. Weniger trivial ist dagegen die Bestimmung eines "Knickes" zwischen zwei Distanzwerten d_{i,j}, zwischen denen die Kontur verläuft: Hierzu sind auch die in Bezug zur Kontur jeweils weiter außenliegenden Distanzwerte d_{i,j} derart miteinzubeziehen, dass die Änderung bzw. die "Steigung" zwischen ihnen zu berechnen ist. In diesem Fall lässt sich durch eine abrupte Änderung der Steigung zwischen zwei Distanzwerten d_{i,j} auf den Verlauf einer Kontur zwischen ihnen schließen. Entsprechende analytische oder Nummerische Methoden, die hierzu in der Auswertungs-Schaltung 13 implementiert sein können, sind hinlänglich bekannt.

Sofern auf diese Weise der Innenquerschnitt des Behälters 2 ermittelt wird, kann darauf basierend auf die Innenquerschnittsfläche des Behälters 2 geschlossen werden. Dies wiederum kann genutzt werden, um auf Basis der ermittelten Distanzwerte d_{i,j} (oder auf Basis des vom Radar-Modul 11 ermittelten Abstandes D_{R}, sofern das Füllgut 3 eine ebene Oberfläche aufweist) das Volumen, das das Füllgut 3 momentan im Behälter 2 einnimmt, zu berechnen. Dies bietet den Vorteil, dass bei der Berechnung des Volumens auch eine etwaige Änderung des Innenquerschnittes des Behälters 2 mit der Höhe h berücksichtigt werden kann. Es versteht sich von selbst, dass diese Art der Volumenberechnung nicht nur bei kreisförmigen Innenquerschnitten, wie in Fig. 2 dargestellt, angewendet werden kann.

Bei Erkennung einer Kontur durch die Auswerte-Schaltung 13 kann die Kontur nicht nur dem Innenquerschnitt des Behälters 2 zugeordnet werden. Sofern im Behälter 2 innerhalb der Aufnahme R_{3D} Störkörper wie Rührwerke oder Zu-/Abflüsse vorhanden sind, können auch diese als Konturen in der Aufnahme R_{3D} erscheinen. Im Falle von rotierenden Rührwerken könnte eine sich bewegende Kontur entsprechend zugeordnet werden. Dadurch kann bspw. ein vom Radar-Modul 11 gemessener Abstandswert D_{R}, der mit den von der Kontur umschlossenen Distanzwerten d_{i,j}, übereinstimmt, als fehlerhaft eingestuft werden.

Sofern die Auswerte-Schaltung 13 eine Kontur-Erkennung ausführen kann, gibt es neben der Störkörper-Erkennung und der Bestimmung des Behälter-Innenquerschnittes eine weitere Anwendungsmöglichkeit: Bei Anbringung des Füllstandsmessgerätes 1 an einem Rundanschluss wie beispielsweise einem Flansch (siehe Fig. 1) kann eine etwaig erkannte Kontur auch der Flanschöffnung zugeordnet werden. Diejenigen Distanzwerte d_{i,j}, die der Kontur zugeordnet sind, können zur Ermittlung des Abstandes D_{R} durch das Radar-Modul 11 dienen: So kann das nach Reflektion empfangene Radarsignal S_{R}, das sowohl bei Puls-Radar- als auch beim FMCW-Verfahren eine Zeit- und somit eine Distanzabhängigkeit aufweist, erst unterhalb der zum Flansch korrespondierenden Distanzwerte d_{i,j} ausgewertet werden, um Stör-Anteile des empfangenen Radarsignals S_{R} aus diesem Bereich auszublenden.

### Bezugszeichenliste

- 1: Füllstandsmessgerät
- 2: Behälter
- 3: Füllgut
- 4: Übergeordnete Einheit
- 11: Radar-Modul
- 12: 3D-Kamera
- 13: Auswerte-Schaltung
- D_{R}: Abstand, vom Radar-Modul ermittelt
- d_{i,j}: Distanzwerte, von der 3D-Kamera ermittelt
- dₘₐₓ: Maximaler Distanzwert
- dₘᵢₙ: Minimaler Distanzwert
- m;: nAufnahmebereich
- h: Einbauhöhe
- L: Füllstand
- Lₘₐₓ: Maximal-Füllstand
- S_{R}: Radarsignal
- s_{f1}, Sfn: Hinweis-Signal
- Δd: Differenzwert
- Δdₘₐₓ: Maximalspanne

## Patentansprüche

1. Füllstandsmessgerät zur Bestimmung des Füllstandes (L_{R}) eines in einem Behälter (2) befindlichen Füllgutes (3), umfassend,
- Ein Radar-Modul (11), das ausgelegt ist, ein Radarsignal (S_{R}) in Richtung des Füllgutes (3) auszusenden und anhand des reflektierten Radarsignals (S_{R}) einen Abstand (D_{R}) zur Oberfläche des Füllgutes (3) zu bestimmen,
- Eine 3D-Kamera (12), die konzipiert ist, um anhand einer Aufnahme (R_{3D}) von zumindest einem Bereich ([m; n]) der Oberfläche des Füllgutes (3) eine Vielzahl an Distanzwerten (d_{i,j}) in Abhängigkeit korrespondierender Positionen ([i, j]) innerhalb des Bereichs ([m; n]) zu ermitteln, und
- eine Auswerte-Schaltung (13),
**dadurch gekennzeichnet, dass**
die Auswerte-Schaltung (13) ausgelegt ist, um
∘ aus den Distanzwerten (d_{i,j}) einen maximalen Distanzwert (dₘₐₓ) und einen minimalen Distanzwert (dₘᵢₙ) zu ermitteln, und um
∘ anhand des Abstandes (D_{R}) den Füllstand (L_{R}) zu bestimmen, sofern der Abstand (D_{R}) kleiner als der maximale Distanzwert (dₘₐₓ) und größer als der minimale Distanzwert (dₘᵢₙ) ist.

2. Füllstandsmessgerät nach Anspruch 1,
**dadurch gekennzeichnet, dass**
die Auswerte-Schaltung (13) ausgestaltet ist, um ein erstes Hinweis-Signal (s_{f1}) auszugeben, sofern der vom Radar-Modul (11) ermittelte Abstand (D_{R}) kleiner als der minimale Distanzwert (dₘᵢₙ) oder größer als der maximale Distanzwert (dₘₐₓ) ist.

3. Füllstandsmessgerät nach Anspruch 1 oder 2,
**dadurch gekennzeichnet, dass**
die Auswerte-Schaltung (13) ausgestaltet ist, um das erste Hinweis-Signal (s_{f1}) und/oder ein weiteres Hinweis-Signal (s_{fn}) auszugeben, sofern der minimale Distanzwert (dₘᵢₙ) kleiner als ein entsprechender Wert zu einem vordefinierten Maximal-Füllstand (Lₘₐₓ) ist.

4. Füllstandsmessgerät nach einem der vorherigen Ansprüche,
**dadurch gekennzeichnet, dass**
die Auswerte-Schaltung (13) ausgestaltet ist, um
- durch Subtraktion des minimalen Distanzwertes (dₘᵢₙ) vom maximalen Distanzwert (dₘₐₓ) einen Differenzwert (Δd) zu berechnen, und um
- das erste Hinweis-Signal (s_{f1}) und/oder ein weiteres Hinweis-Signal (s_{fn}) auszugeben, sofern der Differenzwert (Δd) eine vordefinierte Maximalspanne (Δdₘₐₓ) überschreitet.

5. Füllstandsmessgerät nach einem der vorhergehenden Ansprüche,
**dadurch gekennzeichnet, dass**
die Auswerte-Schaltung (13) ausgelegt ist, um aus den Distanzwerten (d_{i,j}) eines ausgewählten Ausschnitts des Bereichs ([m; n]) der Aufnahme (R_{3D}) eine Streuung ermittelt, und wobei die Auswerte-Schaltung (13) aus der ermittelten Streuung eine Rauigkeit der Oberfläche des Füllgutes (3) bestimmt.

6. Füllstandsmessgerät nach einem der vorhergehenden Ansprüche,
**dadurch gekennzeichnet, dass**
das Radar-Modul (12) konzipiert ist, um das Radarsignal (S_{HF}) mit einer Frequenz von zumindest 75 GHz auszusenden.

7. Füllstandsmessgerät nach einem der vorhergehenden Ansprüche,
**dadurch gekennzeichnet, dass**
das Radar-Modul (12) ausgelegt ist, um den Abstand (D_{R}) zur Oberfläche des Füllgutes (3) nach dem FMCW-Verfahren oder nach dem Puls-Laufzeit Verfahren zu ermitteln.

8. Füllstandsmessgerät nach einem der vorhergehenden Ansprüche,
**dadurch gekennzeichnet, dass**
die 3D-Kamera (12) ausgelegt ist, in dem Bereich ([m; n]), in dem die 3D-Kamera (12) die Distanzwerte (d_{i,j}) ermittelt, ein Graustufenbild von der Oberfläche des Füllgutes (3) zu erzeugen.

9. Füllstandsmessgerät nach einem der vorhergehenden Ansprüche,
**dadurch gekennzeichnet, dass**
die Auswerte-Schaltung (13) ausgelegt ist, um anhand der Aufnahme (R_{3D}) innerhalb des Bereichs ([m; n]) eine Kontur zu erfassen, sofern entlang Kontur eine Unstetigkeit zwischen den Distanzwerten (d_{i,j}) beidseitig der Kontur detektiert wird.

10. Füllstandsmessgerät nach Anspruch 9,
**dadurch gekennzeichnet, dass**
die Auswerte-Schaltung (13) ausgelegt ist, um eine Bewegung und/oder eine Verschiebung der Kontur zu erfassen.

11. Füllstandsmessgerät nach Anspruch 9 oder 10,
**dadurch gekennzeichnet, dass**
die Auswerte-Schaltung (13) ausgelegt ist, um anhand der erfassten Kontur einen Innenquerschnitt, insbesondere eine Innenquerschnittsfläche, des Behälters (2) zu ermitteln.

12. Füllstandsmessgerät nach zumindest einem der vorhergehenden Ansprüche, **dadurch gekennzeichnet, dass**
die Auswerte-Schaltung (13) ausgelegt ist, die Ausrichtung des Füllstandsmessgerätes gegenüber dem Lot zu bestimmen, sofern anhand der Aufnahme (R_{3D}) innerhalb des Bereichs ([m; n]) eine in etwa planare Ebene ermittelbar ist.

13. Verfahren zur Bestimmung des Füllstandes (L_{R}) eines in einem Behälter (2) befindlichen Füllgutes (3) mittels des Füllstandsmessgerätes (1) nach einem der vorhergehenden Ansprüche, folgende Verfahrensschritte umfassend:
- Bestimmung eines Abstandes (D_{R}) zur Oberfläche des Füllgutes (3) anhand eines reflektierten Radarsignals (S_{R}), das von einem Radar-Modul (11) in Richtung des Füllgutes (3) ausgesendet ist,
- Ermittlung einer Vielzahl an Distanzwerten (d_{i,j}) anhand einer Aufnahme (R_{3D}) einer 3D-Kamera (12) von zumindest einem Bereich ([m; n]) der Oberfläche des Füllgutes (3),
**gekennzeichnet durch**
- Bestimmung eines maximalen Distanzwertes (dₘₐₓ) und eines minimalen Distanzwerts (dₘᵢₙ) aus den Distanzwerten (d_{i,j}) durch eine Auswerte-Schaltung (13),
- Bestimmung des Füllstandes (L_{R}) anhand des Abstandes (D_{R}) durch die Auswerte-Einheit (13), sofern der Abstand (D_{R}) kleiner als der maximale Distanzwert (dₘₐₓ) und größer als der minimale Distanzwert (dₘᵢₙ) ist.

## Claims

1. Level transmitter designed to determine the level (L_{R}) of a medium (3) located in a vessel (2), said transmitter comprising:
- a radar module (11), which is designed to transmit a radar signal (S_{R}) in the direction of the medium (3) and to determine a distance (D_{R}) in relation to the surface of the medium (3) using the reflected radar signal (S_{R}),
- a 3D camera (12), which is designed to determine - on the basis of a recorded image (R_{3D}) of at least one area ([m ; n]) of the surface of medium (3) - multiple distance values (d_{i,j}) as a function of corresponding positions ([i, j]) within the area ([m ; n]), and
- an evaluation circuit (13),
**characterized in that**
the evaluation circuit (13) is designed to
∘ determine a maximum distance value (dₘₐₓ) and a minimum distance value (dₘᵢₙ) from the distance values (d_{i,j}), and
∘ determine the level (L_{R}) on the basis of the distance (D_{R}) if the distance (D_{R}) is less than the maximum distance value (dₘₐₓ) and greater than the minimum distance value (dmin).

2. Level transmitter as claimed in Claim 1,
**characterized in that**
the evaluation circuit (13) is designed to output a first notification signal (s_{f1}) if the distance (D_{R}) determined by the radar module (11) is less than the minimum distance value (dₘᵢₙ) or greater than the maximum distance value (dmax).

3. Level transmitter as claimed in Claim 1 or 2,
**characterized in that**
the evaluation circuit (13) is designed to output the first notification signal (s_{f1}) and/or another notification signal (s_{fn}) if the minimum distance value (dₘᵢₙ) is less than a value corresponding for a predefined maximum level (Lₘₐₓ).

4. Level transmitter as claimed in one of the previous claims,
**characterized in that**
the evaluation circuit (13) is designed to
- calculate a difference value (Δd) by subtracting the minimum distance value (dₘᵢₙ) from the maximum distance value (dmax), and to
- output the first notification signal (s_{f1}) and/or another notification signal (s_{fn}), if the difference value (Δd) exceeds a predefined maximum span (Δdₘₐₓ).

5. Level transmitter as claimed in one of the previous claims,
**characterized in that**
the evaluation circuit (13) is designed to determine a distribution from the distance values (d_{i,j}) of a selected section of the area ([m ; n]) of the recorded image (R_{3D}), and wherein the evaluation circuit (13) determines a roughness of the surface of the medium (3) from the distribution determined.

6. Level transmitter as claimed in one of the previous claims,
**characterized in that**
the radar module (12) is designed to transmit the radar signal (S_{HF}) at a frequency of at least 75 GHz.

7. Level transmitter as claimed in one of the previous claims,
**characterized in that**
the radar module (12) is designed to determine the distance (D_{R}) in relation to the surface of the medium (3) according to the FMCW method or according to the pulse transit time method.

8. Level transmitter as claimed in one of the previous claims,
**characterized in that**
the 3D camera (12) is designed to produce a grey-scale image of the surface of the medium (3) in the area ([m ; n]) in which the 3D camera (12) determines the distance values (d_{i,j}).

9. Level transmitter as claimed in one of the previous claims,
**characterized in that**
the evaluation circuit (13) is designed to detect a contour within the area ([m ; n]) using the recorded image (R_{3D}) if a discontinuity is detected between the values (d_{i,j}) on both sides of the contour.

10. Level transmitter as claimed in Claim 9,
**characterized in that**
the evaluation circuit (13) is designed to detect a movement and/or a shift of the contour.

11. Level transmitter as claimed in Claim 9 or 10,
**characterized in that**
the evaluation circuit (13) is designed to determine an interior cross-section, particularly an interior cross-section surface, of the vessel (2) using the contour detected.

12. Level transmitter as claimed in at least one of the previous claims, **characterized in that**
the evaluation circuit (13) is designed to determine the orientation of the level transmitter in relation to the plumb line, provided that an approximately planar level can be determined within the area ([m ; n]) using the recorded image (R_{3D}).

13. Procedure designed to determine the level (L_{R}) of a medium (3) located in a vessel (2) using the level transmitter (1) as claimed in one or more of the previous claims, wherein said procedure comprises the following steps:
- Determination of a distance (D_{R}) in relation to the surface of the medium (3) using a reflected radar signal (S_{R}), wherein said signal is emitted by a radar module (11) in the direction of the medium (3),
- Determination of multiple distance values (d_{i,j}) using a recorded image (R_{3D}) of a 3D camera (12) of at least one area ([m ; n]) of the surface of the medium (3), **characterized by the following steps**:
- Determination of a maximum distance value (dₘₐₓ) and a minimum distance value (dₘᵢₙ) from the distance values (d_{i,j}) by the evaluation circuit (13),
- Determination of the level (L_{R}) by the evaluation unit (13) using the distance (D_{R}) if the distance (D_{R}) is less than the maximum distance value (dₘₐₓ) and greater than the minimum distance value (dmin).

## Revendications

1. Transmetteur de niveau destiné à la détermination du niveau (L_{R}) d'un produit (3) se trouvant dans un réservoir (2), lequel transmetteur comprend :
- un module radar (11), lequel module est conçu pour émettre un signal radar (S_{R}) en direction du produit (3) et pour déterminer une distance (D_{R}) par rapport à la surface du produit (3) à l'aide du signal radar (S_{R}) réfléchi,
- une caméra 3D (12), laquelle caméra est conçue pour déterminer, à l'aide d'une prise de vue (R_{3D}) d'au moins une zone ([m ; n]) de la surface du produit (3), une pluralité de valeurs de distance (d_{i,j}) en fonction de positions correspondantes ([i, j]) à l'intérieur de la zone ([m ; n]), et
- un circuit d'évaluation (13),
**caractérisé en ce que**
le circuit d'évaluation (13) est conçu pour
∘ déterminer une valeur de distance maximale (dₘₐₓ) et une valeur de distance minimale (dₘᵢₙ) à partir des valeurs de distance (d_{i,j}), et pour
∘ déterminer le niveau (L_{R}) à l'aide de la distance (D_{R}), dans la mesure où la distance (D_{R}) est inférieure à la valeur maximale de la distance (dₘₐₓ) et supérieure à la valeur minimale de la distance (dₘᵢₙ).

2. Transmetteur de niveau selon la revendication 1,
**caractérisé**
**en ce que** le circuit d'évaluation (13) est conçu pour émettre un premier signal d'indication (s_{f1}) dans la mesure où la distance (D_{R}) déterminée par le module radar (11) est inférieure à la valeur de distance minimale (dₘᵢₙ) ou supérieure à la valeur de distance maximale (dmax).

3. Transmetteur de niveau selon la revendication 1 ou 2,
**caractérisé**
**en ce que** le circuit d'évaluation (13) est conçu pour émettre le premier signal d'indication (s_{f1}) et/ou un autre signal d'indication (s_{fn}) dans la mesure où la valeur de distance minimale (dₘᵢₙ) est inférieure à une valeur correspondant à un niveau maximal prédéfini (Lmax).

4. Transmetteur de niveau selon l'une des revendications précédentes, **caractérisé**
**en ce que** le circuit d'évaluation (13) est conçu pour
- calculer une valeur de différence (Δd) en soustrayant la valeur de distance minimale (dₘᵢₙ) de la valeur de distance maximale (dmax), et pour
- émettre le premier signal d'indication (s_{f1}) et/ou un autre signal d'indication (s_{fn}), dans la mesure où la valeur de différence (Δd) dépasse une fourchette maximale (Δdₘₐₓ) prédéfinie.

5. Transmetteur de niveau selon l'une des revendications précédentes, **caractérisé**
**en ce que** le circuit d'évaluation (13) est conçu pour déterminer une dispersion à partir des valeurs de distance (d_{i,j}) d'une section sélectionnée de la zone ([m ; n]) de la prise de vue (R_{3D}), le circuit d'évaluation (13) déterminant une rugosité de la surface du produit (3) à partir de la dispersion déterminée.

6. Transmetteur de niveau selon l'une des revendications précédentes, **caractérisé**
**en ce que** le module radar (12) est conçu pour émettre le signal radar (S_{HF}) à une fréquence d'au moins 75 GHz.

7. Transmetteur de niveau selon l'une des revendications précédentes, **caractérisé**
**en ce que** le module radar (12) est conçu pour déterminer la distance (D_{R}) par rapport à la surface du produit (3) selon le procédé FMCW ou selon le procédé de temps de transit des impulsions.

8. Transmetteur de niveau selon l'une des revendications précédentes, **caractérisé**
**en ce que** la caméra 3D (12) est conçue pour produire une image en niveaux de gris de la surface du produit (3) dans la zone ([m ; n]) dans laquelle la caméra 3D (12) détermine les valeurs de distance (d_{i,j}).

9. Transmetteur de niveau selon l'une des revendications précédentes, **caractérisé**
**en ce que** le circuit d'évaluation (13) est conçu pour détecter un contour à l'aide de la prise de vue (R_{3D}) à l'intérieur de la zone ([m ; n]), dans la mesure où une discontinuité entre les valeurs de distance (d_{i,j}) est détectée de part et d'autre du contour.

10. Transmetteur de niveau selon la revendication 9,
**caractérisé**
**en ce que** le circuit d'évaluation (13) est conçu pour détecter un mouvement et/ou un déplacement du contour.

11. Transmetteur de niveau selon la revendication 9 ou 10,
**caractérisé**
**en ce que** le circuit d'évaluation (13) est conçu pour déterminer une section transversale intérieure, notamment une surface de section transversale intérieure, du réservoir (2) à l'aide du contour détecté.

12. Transmetteur de niveau selon au moins l'une des revendications précédentes, **caractérisé**
**en ce que** le circuit d'évaluation (13) est conçu pour déterminer l'orientation du transmetteur de niveau par rapport à la verticale, dans la mesure où un niveau à peu près plan peut être déterminé à l'aide de la prise de vue (R_{3D}) à l'intérieur de la zone ([m ; n]).

13. Procédé destiné à la détermination du niveau (L_{R}) d'un produit (3) se trouvant dans un réservoir (2) au moyen du transmetteur de niveau (1) selon l'une des revendications précédentes, lequel procédé comprend les étapes suivantes :
- Détermination d'une distance (D_{R}) par rapport à la surface du produit (3) à l'aide d'un signal radar (S_{R}) réfléchi, lequel signal est émis par un module radar (11) en direction du produit (3),
- Détermination d'une pluralité de valeurs de distance (d_{i,j}) à l'aide d'une prise de vue (R_{3D}) d'une caméra 3D (12) d'au moins une zone ([m ; n]) de la surface du produit (3),
**caractérisé par** les étapes suivantes :
- Détermination d'une valeur de distance maximale (dₘₐₓ) et d'une valeur de distance minimale (dₘᵢₙ) à partir des valeurs de distance (d_{i,j}) par un circuit d'évaluation (13),
- Détermination du niveau (L_{R}) à l'aide de la distance (D_{R}) par l'unité d'évaluation (13), dans la mesure où la distance (D_{R}) est inférieure à la valeur de distance maximale (dₘₐₓ) et supérieure à la valeur de distance minimale (dₘᵢₙ).
